# EUROPÄISCHE PATENTSCHRIFT

(11) **EP 3 142 827 B1**
(45) Veröffentlichungstag und Bekanntmachung des Hinweises auf die Patenterteilung: **04.09.2019**
(21) Anmeldenummer: 15722176.3
(22) Anmeldetag: 11.05.2015
(51) Int. Cl.: B23P 11/00, F01L 1/047, F16D 1/072, B24B 19/12

(54) **VERFAHREN ZUR HERSTELLUNG EINER GEBAUTEN NOCKENWELLE**
METHOD FOR PRODUCING AN ASSEMBLED CAMSHAFT
PROCÉDÉ DE FABRICATION D'UN ARBRE À CAMES ASSEMBLÉ

(30) Priorität: 16.05.2014 DE 102014106924
(43) Veröffentlichungstag der Anmeldung: 22.03.2017
(73) Patentinhaber: ThyssenKrupp Presta TecCenter AG, 9492 Eschen (LI)
(72) Erfinder: MUSTER, Manfred, 6713 Ludesch (AT); CURLIC, Marko, 9486 Schaanwald (LI); PFITSCHER, Aaron, 6713 Ludesch (AT); WIESNER, Peter, 9493 Mauren (LI); HOLLWEQUE, Nicolas, 9444 Diepoldsau (CH); SCHÄTZLE, Jörg, 88239 Wangen (DE); DANTHOIS, Martial, 9496 Balzers (LI); HÖBER, Raphael, 6712 Thüringen (AT)
(74) Vertreter: thyssenkrupp Intellectual Property GmbH
(86) Internationale Anmeldenummer: PCT/EP2015/060273
(87) Internationale Veröffentlichungsnummer: WO 2015/173158

(56) Entgegenhaltungen:
- EP-A1- 0 856 642
- WO-A1-03/027446
- WO-A1-2007/012408
- WO-A1-2012/031770
- CN-A- 103 406 758
- DE-A1- 3 301 749
- DE-A1- 3 717 190
- DE-A1- 19 710 847
- JP-A- H0 989 077
- JP-A- H08 270 409
- US-A1- 2007 180 694

## Beschreibung

Die vorliegende Erfindung betrifft ein Verfahren zur Herstellung einer einsatzbereiten Nockenwelle zur Steuerung von Ventilen einer Brennkraftmaschine, mit einer Trägerwelle, an der eine Endkomponente, beispielsweise ein Antriebsrad, ein Phasensteller oder ein Teil eines Phasenstellers, angeordnet ist, und mit mehreren Nockenelementen, die positionsfest auf der Trägerwelle aufgebracht sind.

### STAND DER TECHNIK

Ein Verfahren zur Herstellung einer einsatzbereiten Nockenwelle ist beispielsweise aus der WO 2012/031 770 A1 bekannt, wobei zum Fügen von Nockenelementen auf der Trägerwelle ein Abkühlen der Trägerwelle und ein Aufheizen der Nockenelemente vorgesehen ist, um die Trägerwelle durch die Bohrungen der Nockenwelle hindurchschieben zu können. Anschließend soll die Trägerwelle wieder erwärmt werden und die Nockenelemente werden wieder abgekühlt. Dadurch werden die Nockenelemente auf der Trägerwelle mit einer Presspassung gesichert, die sich durch die thermischen Formänderungen ergibt. Das Aufheizen und das anschließende Abkühlen ist jedoch nachteilhaft und erfordert einen hohen Werkzeugaufwand und wird insbesondere dann angewendet, wenn eine durchgehende, nicht öffenbare Lagergasse beispielsweise in einem Nockenwellenmodul zur Anordnung auf dem Zylinderkopf einer Brennkraftmaschine vorgesehen ist, durch die die Trägerwelle hindurchgeschoben werden muss. Häufig ist ein weiterer Bearbeitungsschritt erforderlich, um die Nockenelemente auf der Trägerwelle auszurichten, der ebenfalls vermieden werden soll.

Die DE 37 17 190 A1 zeigt ein Grundprinzip eines Verfahrens, Nockenelemente auf vorbereitete Nockensetzstellen aufzubringen, die auf der Außenoberfläche einer Trägerwelle eingebracht sind. Die Nockensetzstellen bilden Abschnitte, die gegenüber den nicht die Nockensetzstellen bildenden Abschnitten der Trägerwelle einen vergrößerten Durchmesser aufweisen. Dabei wird vorgeschlagen, die Nockenelemente unter plastischer Verformung in der Nabenverbindung auf die Nockensetzstellen aufzuschieben. Die Nockensetzstellen werden dabei durch einen Rolliervorgang oder einen Walzvorgang erzeugt, und können beispielsweise eine umlaufende Rillenstruktur bilden. Die aufgeweiteten Bereiche zur Bildung der Nockensetzstellen sollen mit einem Dornwerkzeug hergestellt werden, wodurch eine nur geringe Genauigkeit erzeugt werden kann. Um eine einsatzbereite Nockenwelle herzustellen, müssen die aus einem Sintermaterial hergestellten Nockenelemente anschließend endbearbeitet werden, beispielsweise durch ein Schleif- und/oder Polierverfahren.

Die DE 197 10 847 A1 offenbart eine zusammengesetzte Steuerwelle, insbesondere Nockenwelle für eine Verbrennungskraftmaschine, sowie ein Verfahren zu deren Herstellung.

Häufig weisen Nockenwellen Endkomponenten auf, beispielsweise in Form eines Antriebsrades für ein Zugmittel, also beispielsweise ein Kettenrad, ein Riemenrad oder ein Anschlussflansch für ein Riemenrad. Die Endkomponente kann an der Trägerwelle befestigt werden und kann beispielsweise auch einen Phasensteller oder wenigstens einen Teil eines Phasenstellers bilden. Derartige Endkomponenten müssen zur Trägerwelle genau ausgerichtet werden, und es sind häufig mehrere spanende Bearbeitungsschritte in verschiedenen Aufspannungen notwendig, um die Endkomponente und die Trägerwelle insbesondere frei von Lage- und Rundlauffehlern zueinander bereitzustellen.

### OFFENBARUNG DER ERFINDUNG

Aufgabe der Erfindung ist die Weiterbildung eines Verfahrens zur Herstellung einer einsatzbereiten Nockenwelle, das ohne thermische Fügeschritte auskommt und die Bereitstellung einer einsatzbereiten Nockenwelle soll möglichst mit wenigen Schritten einfach möglich sein.

Diese Aufgabe wird durch ein Verfahren mit den Merkmalen des Anspruchs 1 gelöst. Vorteilhafte Weiterbildungen der Erfindung sind in den abhängigen Ansprüchen angegeben. Zur Lösung der Aufgabe weist das Verfahren gemäß der vorliegenden Erfindung wenigstens die folgenden Schritte auf:
a) Bereitstellen der Trägerwelle und der Endkomponente,
b) Fügen der Endkomponente an die Trägerwelle,
c) einsatzfertiges Schleifen wenigstens der Trägerwelle zur Ausbildung von Nockensetzstellen und einsatzfertige Bearbeitung der Endkomponente.
d) Einbringen eines Oberflächenprofils in eine ersten Nockensetzstelle,
e) Bereitstellen eines Nockenelementes mit einsatzfertigen Eigenschaften,
f) Setzen des Nockenelementes auf die mit dem Oberflächenprofil versehene Nockensetzstelle und
g) Wiederholung der Schritte d) bis f) mit einer Häufigkeit gemäß einer geforderten Anzahl von Nockenelementen.

Durch die Anwendung des erfindungsgemäßen Verfahrens kann auf einfache Weise eine einsatzbereite Nockenwelle hergestellt werden, die ohne thermische Fügeverfahren auskommt. Insbesondere können Nockenelemente bereitgestellt werden, die bereits endbearbeitet sind. Durch das einsatzfertige Schleifen wenigstens der Trägerwelle, jedoch auch der Endkomponente, kann der Vorteil erreicht werden, beispielsweise auch Lagerstellen auf der Trägerwelle bereits durch die Schleifbearbeitung so zu bearbeiten, dass die mit den Schritten d) bis f) hergestellte Nockenwelle mit einer entsprechenden Anzahl von Nockenelementen keiner weiteren Bearbeitung zugeführt werden muss. Nachdem das letzte Nockenelement auf die letzte Nockensetzstelle aufgebracht ist, kann die Nockenwelle einsatzbereit zur Verfügung gestellt werden, zum Beispiel zum Einbau in einen Zylinderkopf oder in ein Haubenmodul. Nicht aufgeführt ist das Fügen von Distanzelementen, Lagerringen und dergleichen, das wie auch bei den Nockenelementen mit den Schritten d) bis f) vorgesehen werden kann.

Der Schritt c) eignet sich zur einsatzfertigen Bearbeitung, insbesondere einer Schleifbearbeitung, der Endkomponente. Dadurch, dass die Endkomponente vor dem einsatzfertigen Schleifen mit der Trägerwelle gefügt wurde, kann in einer Aufspannung, beispielsweise in einer Schleifanlage, die Trägerwelle und gleichzeitig auch die Endkomponente durch eine Schleifbearbeitung im Verbund einsatzfertig endbearbeitet werden.

Das Schleifen der Trägerwelle kann eine Bearbeitung der Nockensetzstellen und eine Endbearbeitung von auf der Trägerwelle ausgebildeten Lagerstellen umfassen, die zwischen den oder benachbart zu den Nockensetzstellen ausgebildet sind. Insbesondere kann das einsatzfertige Schleifen der Trägerwelle und insbesondere der Endkomponente auf einer Schleifanlage ausgeführt werden, wobei anschließend der Verbund aus der geschliffenen Trägerwelle und der Endkomponente überführt werden kann in eine Nockensetzanlage, und mittels der Nockensetzanlage kann wenigstens das Einbringen des Oberflächenprofils und das Setzen des Nockenelementes erfolgen. Das Einbringen des Oberflächenprofils kann beispielsweise mit einem Rollierwerkzeug vorgenommen werden. Dadurch, dass die Nockensetzstellen durch eine Schleifbearbeitung vorbereitet wurden, kann durch eine entsprechend genaue Herstellung des Oberflächenprofils ein Aufsetzen der Nockenelemente so genau erfolgen, dass keine Endbearbeitung mehr erfolgen muss, beispielsweise durch einen abschließenden Schleif- und/oder Polierschritt. Durch das Schleifbearbeiten der Nockensetzstellen und das gezielte Herstellen eines Oberflächenprofils mit einem Rollierwerkzeug können folglich Nockenelemente bereitgestellt werden, die bereits endbearbeitet sind.

Für das Einbringen des Oberflächenprofils und für das Setzen des Nockenelementes auf einer Nockensetzanlage kann die Endkomponente in der Nockensetzanlage eingespannt werden und es kann vorgesehen werden, dass die Trägerwelle auf einer der Endkomponente gegenüberliegenden Seite mit einer Gegenspitze eingespannt wird.

Die Nockenelemente können für das Bereitstellen und das Setzen auf die mit dem Oberflächenprofil versehenen Nockensetzstellen über die Gegenspitze geführt und dadurch einfach auf die Trägerwelle aufgefädelt werden, sodass die Gegenspitze während des Fügeverfahrens aller Nockenelemente in Anordnung an der Trägerwelle verbleiben kann. Dadurch vereinfacht sich das Verfahren des Setzens der Nockenelemente auf die Nockensetzstellen erheblich. Die Gegenspitze kann hierfür einen Durchmesser aufweisen, der kleiner ist als die Bohrungen in den Nockenelementen.

Dadurch, dass erst vor jedem Aufsetzvorgang eines Nockenelementes eine Nockensetzstelle oberflächenbearbeitet wird, wird der Vorteil erreicht, dass die Nockenelemente kraftlos und insbesondere kontaktfrei über die vorgelagerten Nockensetzstellen geführt werden können. Das Einbringen des Oberflächenprofils erfolgt dabei an einer ersten Nockensetzstelle, die beispielsweise der Endkomponente an der Trägerwelle zugewandt ist. Über das freie Ende der Trägerwelle, an dem die Gegenspitze angesetzt ist, kann das Nockenelement auf die Trägerwelle aufgefädelt werden, ohne dass das Nockenelement über die nicht oberflächenbearbeiteten Nockensetzstellen gedrückt werden muss. Erst vor dem Aufsetzen des Nockenelementes auf die zugeordnete Nockensetzstelle greift das Rollierwerkzeug in die Nockensetzstelle ein und erzeugt das Oberflächenprofil, sodass das Nockenelement haltend auf die Nockensetzstelle mit dem Oberflächenprofil aufgebracht und insbesondere angepresst werden kann.

Der besondere Vorteil des erfindungsgemäßen Verfahrens liegt darin, dass zum Bereitstellen der Nockenelemente mit einsatzfertigen Eigenschaften die Nockenelemente vor dem Setzen auf die Trägerwelle auf Endmaß geschliffen und/oder oberflächenbearbeitet werden können und insbesondere eine rotatorische Ausrichtung aufweisen können, die der späteren Ausrichtung auf der Trägerwelle entspricht. Nur äußerst selten kann es dabei notwendig sein, dass dann, wenn die Wiederholgenauigkeit des Rollierdurchmessers nicht ausreicht, eine elektromechanische Achse oder ein Kalibrierwerkzeug eingesetzt werden kann. Grundsätzlich konnte jedoch festgestellt werden, dass durch das erfindungsgemäße Verfahren nach Aufbringen der Nockenelemente die Nockenwelle eine Genauigkeit aufweist, die zum Einsatz hinreichend ist. Insbesondere dann, wenn kein thermisches Fügeverfahren zum Einsatz kommt, durch das ein Verzug oder eine Veränderung von Oberflächen die Folge sein können, können Komponenten vorgesehen werden, die bereits endbearbeitet und beispielsweise auch beschichtet sind. Ähnlich wie bei den Nockenelementen können auch weitere Elemente, die auf der Trägerwelle aufgebracht werden sollen, Oberflächenendbearbeitet und/oder -beschichtet sein, wie beispielsweise Lagerringe.

Dank Einsatz neuerer Technologien können fertig geschliffene Nockenelemente auf die Trägerwelle aufgesetzt werden, und dadurch können sämtliche Prozessschritte, welche die Nockenelemente betreffen, vor dem Zusammenbau beziehungsweise vor der Montage durchgeführt werden. In diesem Zusammenhang können die Nockenelemente nicht nur geschliffen, sondern beispielsweise auch bereits beschichtet werden, bevor diese auf die Trägerwelle aufgepresst werden. Bei einem derartigen Verfahren werden die Nockenelemente beispielsweise als Paket angrenzend aneinander geschliffen und nach Bedarf fertig bearbeitet, beispielsweise durch eine Beschichtung. Als Paket, also nebeneinander beispielsweise auf einem Dorn oder einem sonstigen Trägerelement aufgefädelt, können die Nockenelemente anschließend beschichtet werden, wodurch nur die Lauffläche beschichtet wird, die Seitenflächen jedoch nicht. Nach dem Beschichten können die Nockenelemente direkt zum Aufsetzen auf die Nockensetzstellen mit der Oberflächenprofilierung bereitgestellt werden.

Die Beschichtung kann beispielsweise eine DLC-Beschichtung aufweisen, durch die eine "Diamond-Like-Carbon-Beschichtung" beschrieben ist.

Beispielsweise können beim einsatzfertigen Schleifen der Nockensetzstellen an diesen angeformte Einführphasen vorgesehen werden, wodurch das Aufschieben der Nockenelemente über die Nockensetzstellen ohne Oberflächenprofilierung vereinfacht wird.

### BEVORZUGTES AUSFÜHRUNGSBEISPIEL DER ERFINDUNG

Weitere, die Erfindung verbessernde Maßnahmen werden nachstehend mit der Beschreibung einer bevorzugten Abfolge des Verfahrens im Rahmen eines Ausführungsbeispiels der Erfindung anhand der Figuren näher dargestellt. Es zeigt:
- Figur 1: eine Trägerwelle mit einer ungeschliffenen Oberfläche, wie diese gemäß dem Verfahrensschritt a) bereitgestellt werden kann,
- Figur 2: die Ansicht der Trägerwelle mit der ungeschliffenen Oberfläche und mit einer Endkomponente, die an einer Endseite der Trägerwelle angeordnet ist, wie in Verfahrensschritt b) angegeben,
- Figur 3: der Verbund aus der Trägerwelle und der Endkomponente in einem einsatzfertig geschliffenen Zustand, sodass auf der Trägerwelle Nockensetzstellen ausgebildet sind,
- Figur 4: der Verbund der Trägerwelle mit der Endkomponente, wobei in nicht näher gezeigter Weise die Endkomponente in einer Nockensetzanlage eingespannt ist und wobei auf der gegenüberliegenden Seite der Endkomponente das Trägerrohr mit einer Gegenspitze gehalten ist und
- Figur 5: eine schematische Ansicht einer Trägerwelle mit einer Endkomponente, und auf die Trägerwelle werden Nockenelemente aufgesetzt, wobei auf die Nockensetzstellen eine Oberflächenprofilierung eingebracht wird, wozu ein Rollierwerkzeug schematisch gezeigt ist.

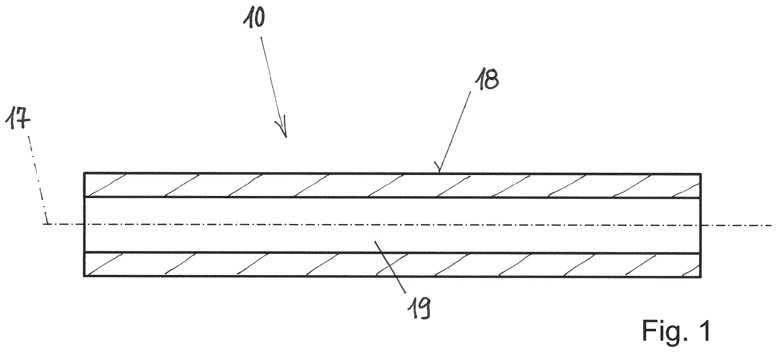

In Figur 1 ist in schematisierter Weise eine Trägerwelle 10 mit einer ungeschliffenen Oberfläche 18 dargestellt, wobei die Trägerwelle 10 als Hohlwelle ausgebildet ist und einen sich entlang der Mittelachse 17 erstreckenden Hohlraum 19 aufweist. Damit bildet die Trägerwelle 10 ein gewichtsminimiertes Rohr, das sich rotationssymmetrisch um die Mittelachse 17 herum erstreckt und beispielsweise von einem Stangenmaterial abgelängt sein kann.

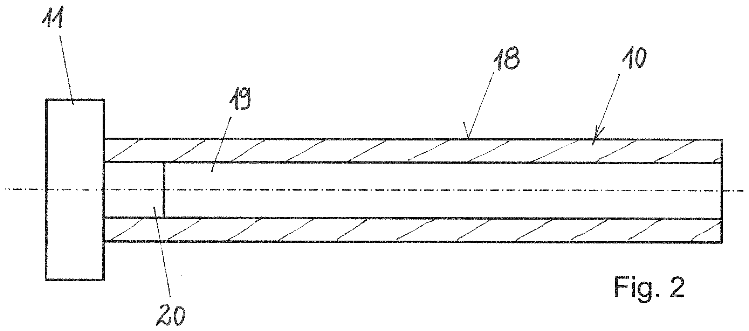

Figur 2 stellt einen Verbund aus der Trägerwelle 10 und einer Endkomponente 11 dar, und die Endkomponente 11 kann beispielsweise ein Antriebsrad, ein Phasensteller oder ein Teil ein eines Phasenstellers sein, und die Endkomponente 11 ist im Rahmen der vorliegenden Erfindung Teil der einsatzbereiten Nockenwelle. Zur Befestigung der Endkomponente 11 weist diese einen Ansatz 20 auf, der beispielhaft in den Hohlraum 19 in der Trägerwelle 10 eingebracht ist, wobei die Endkomponente 11 auch auf andere Weise an der Trägerwelle 10 befestigt werden kann, beispielsweise durch ein stoffschlüssiges Fügeverfahren oder durch Verbindungselemente. Dabei weist die Trägerwelle 10 die ungeschliffene Oberfläche 18 auf, wobei auch die Endkomponente 11 eine ungeschliffene, insbesondere unbehandelte Oberfläche aufweisen kann. Beispielsweise kann die Endkomponente 11 auf einfache Weise an der Trägerwelle 10 gefügt sein, ohne dass auf eine Lage- und Maßtoleranz geachtet werden muss, da, wie nachfolgend beschrieben, eine Schleifbearbeitung sowohl der Trägerwelle 10 als auch der Endkomponente 11 in einem Verbund in einer gemeinsamen Aufspannung erfolgt.

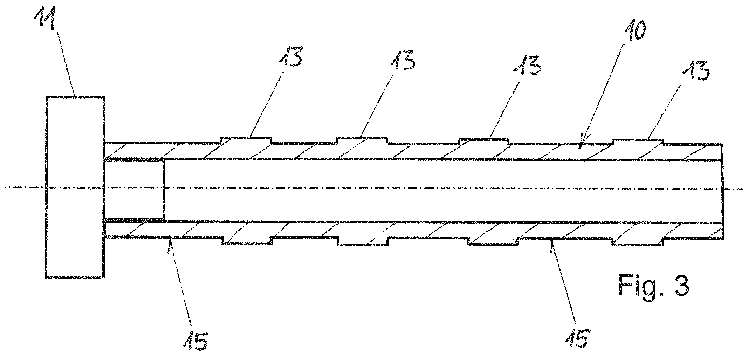

Figur 3 zeigt den Verbund aus der Trägerwelle 10 und der Endkomponente 11 in einem geschliffenen Zustand. Durch die Schleifbearbeitung bis zu einem einsatzfertigen Zustand der Trägerwelle 10 und der Endkomponente 11 ist auf der Außenseite der Trägerwelle 10 eine Abfolge von Nockensetzstellen 13 gezeigt. Beispielhaft sind weiterhin zwei Lagerstellen 15 gezeigt, und die Lagerstellen 15 weisen einen kleineren Durchmesser auf als der Durchmesser der Nockensetzstellen 13. Auf nicht näher gezeigte Weise kann auch die Endkomponente 11 spanend bearbeitet sein, und die Endkomponente 11 bildet beispielsweise ein Antriebsrad, eine Sensorscheibe, ein Teil eines Phasenstellers oder dergleichen.

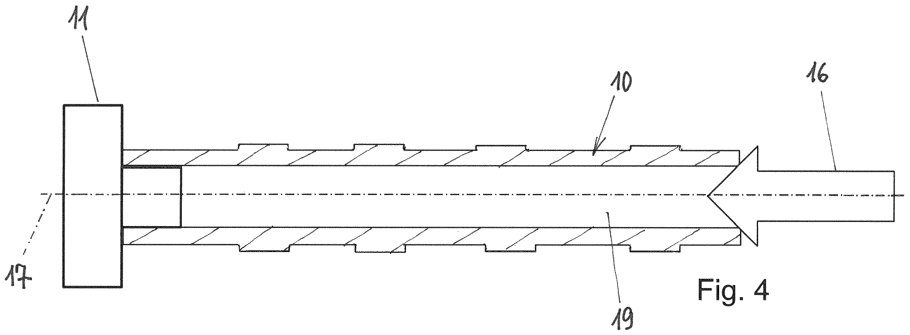

Figur 4 zeigt in Weiterbildung des Verbundes aus der Trägerwelle 10 und der Endkomponente 11 gemäß Figur 3 den Verbund in Aufspannung auf einer Nockensetzanlage, wobei in nicht näher gezeigter Weise die Endkomponente 11 eingespannt sein kann und auf der gegenüberliegenden Seite der Endkomponente 11 ist die Trägerwelle 10 auf einer Gegenspitze 16 aufgenommen. Die Gegenspitze 16 ist beispielsweise endseitig in den Hohlraum 19 eingeführt. In dieser Aufspannung kann der Verbund aus der Trägerwelle 10 und der Endkomponente 11 in Rotation um die Mittelachse 17 gebracht werden.

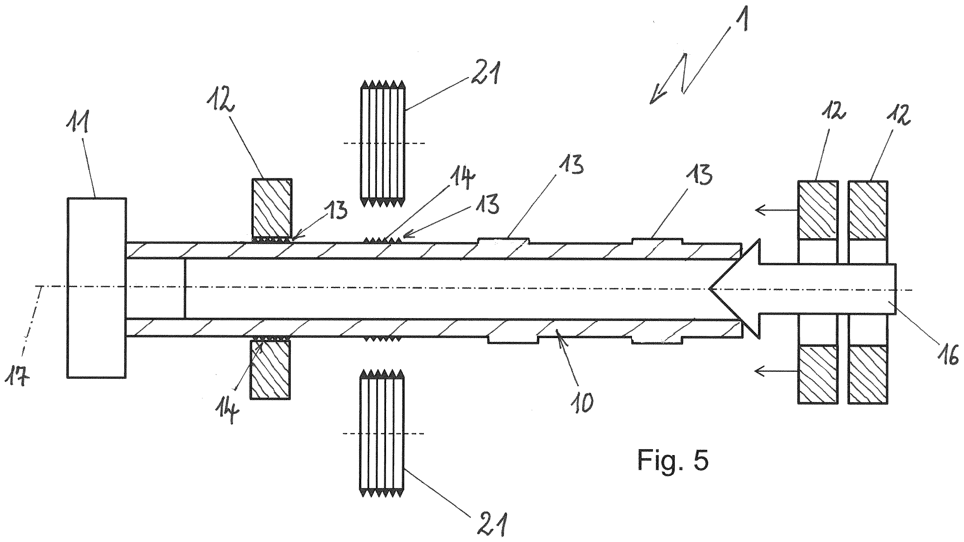

Figur 5 zeigt schließlich den Verbund aus der Trägerwelle 10 und der Endkomponente 11, und eine erste Nockensetzstelle 13 ist bereits mit einem schematisch dargestellten Rollierwerkzeug 21 bearbeitet und mit einem Nockenelement 12 bestückt worden, wobei die Nockensetzstelle 13 auf der linken Seite benachbart zur Endkomponente 11 ein Oberflächenprofil 14 aufweist. Das Rollierwerkzeug 21 ist beispielhaft mit einer Rillenstruktur gezeigt, die auf der Nockensetzstelle 13 abgebildet wird, indem das Rollierwerkzeug 21, beispielhaft gezeigt in zweifacher Anordnung, auf die Nockensetzstelle 13 aufgepresst wird, während die Trägerwelle 10 um die Mittelachse 17 in Rotation versetzt wird. Das Rollierwerkzeug 21 ist beispielhaft auf der zweiten Nockensetzstelle 13 gezeigt, die bereits ebenfalls ein Oberflächenprofil 14 aufweist.

Auf die erste Nockensetzstelle 13 ist ein Nockenelement 12 aufgesetzt gezeigt, und weitere Nockenelemente 12 sind beispielhaft über der Gegenspitze 16 gezeigt und werden dort bereitgestellt. Ist durch das Rollierwerkzeug 21 das Oberflächenprofil 14 in die nächste Nockensetzstelle 13 eingebracht worden, so kann ein weiteres Nockenelement 12 auf die entsprechende Setzstelle 13 aufgebracht werden.

Die Nockenelemente 12 können dabei bereits einsatzfertig endbearbeitet und beispielsweise beschichtet sein.

In der Abfolge der Figuren 1 bis 5 kann an dem gezeigten Ausführungsbeispiel das Verfahren zur Herstellung einer einsatzbereiten Nockenwelle 1 wie folgt beschrieben werden.

Unter dem Verfahrensschritt a) wird die Trägerwelle 10 gemäß Figur 1 bereitgestellt, und gemäß dem weiteren Verfahrensschritt b) kann die Endkomponente 11 an die Trägerwelle 10 gefügt werden, wie in Figur 2 gezeigt. Gemäß dem weiteren Verfahrensschritt c) kann ein einsatzfertiges Schleifen wenigstens der Trägerwelle 10 zur Ausbildung von Nockensetzstellen 13 gemäß Figur 3 erfolgen. Dabei erfolgt beim einsatzfertigen Schleifen zusätzlich zur Trägerwelle 10 auch eine Schleifbearbeitung der Endkomponente 11. Das einsatzfertige Schleifen umfasst dabei ferner die einsatzfertige Ausbildung von Lagerstellen 15.

In Figur 4 wird der Verbund aus der Trägerwelle 10 und der Endkomponente 11 von einer Schleifanlage (Figur 3) auf eine Nockensetzanlage (Figuren 4 und 5) überführt. Figur 4 stellt dabei eine Gegenspitze 16 dar, die zur Aufspannung als Teil der Nockensetzanlage dient, und in nicht näher gezeigter Weise kann die Endkomponente 11 zur definierten Aufspannung des Verbundes der Trägerwelle 10 und der Endkomponente 11 eingespannt werden.

Gemäß den weiteren Verfahrensschritten d), e), f) und g) kann wie in Figur 5 gezeigt zunächst das Einbringen eines Oberflächenprofils 14 mittels eines Rollierwerkzeuges 21 erfolgen, wobei das Oberflächenprofil 14 auf die durch eine Schleifbearbeitung vorbereiteten Nockensetzstellen 13 aufgebracht wird. Anschließend erfolgt das Bereitstellen eines Nockenelementes 12 mit einsatzfertigen Eigenschaften, wie im Bereich der Gegenspitze 16 gezeigt, und die Nockenelemente 12 können entlang der Pfeilrichtung über die Trägerwelle 10 geführt werden und gemäß Verfahrensschritt f) kann ein Setzen der Nockenelemente 12 auf die mit einem Oberflächenprofil 14 versehenen Nockensetzstellen 13 erfolgen.

Gemäß dem Verfahrensschritt g) können die Schritte d) bis f) so oft wiederholt werden, bis eine entsprechende Anzahl von Nockenelementen 12 auf der Trägerwelle 10 aufgesetzt ist, und beispielsweise kann das Aufsetzen insgesamt vier Mal erfolgen, wie im Ausführungsbeispiel gezeigt, da vier Nockensetzstellen 13 vorgesehen sind.

### Bezugszeichenliste

- 1: Nockenwelle

- 10: Trägerwelle
- 11: Endkomponente
- 12: Nockenelement
- 13: Nockensetzstelle
- 14: Oberflächenprofil
- 15: Lagerstelle
- 16: Gegenspitze
- 17: Mittelachse
- 18: ungeschliffene Oberfläche
- 19: Hohlraum
- 20: Ansatz
- 21: Rollierwerkzeug

## Patentansprüche

1. Verfahren zur Herstellung einer einsatzbereiten Nockenwelle (1) zur Steuerung von Ventilen einer Brennkraftmaschine, mit einer Trägerwelle (10), an der eine Endkomponente (11), beispielsweise ein Antriebsrad, ein Phasensteller oder ein Teil eines Phasenstellers, angeordnet ist, und mit mehreren Nockenelementen (12), die positionsfest auf der Trägerwelle (10) aufgebracht sind, wobei das Verfahren wenigstens die folgenden Schritte aufweist:
a) Bereitstellen der Trägerwelle (10) und der Endkomponente (11),
b) Fügen der Endkomponente (11) an die Trägerwelle (10),
c) einsatzfertiges Schleifen wenigstens der Trägerwelle (10) zur Ausbildung von Nockensetzstellen (13) und einsatzfertige Bearbeitung der Endkomponente (11),
d) Einbringen eines Oberflächenprofils (14) in eine erste Nockensetzstelle (13),
e) Bereitstellen eines Nockenelementes (12) mit einsatzfertigen Eigenschaften,
f) Setzen des Nockenelementes (12) auf die mit dem Oberflächenprofil (14) versehene Nockensetzstelle (13) und
g) Wiederholung der Schritte d) bis f) mit einer Häufigkeit gemäß einer geforderten Anzahl von Nockenelementen (12).

2. Verfahren nach Anspruch 1, **dadurch gekennzeichnet, dass** die einsatzfertige Bearbeitung der Endkomponente (11) eine Schleifbearbeitung umfasst.

3. Verfahren nach Anspruch 1 oder 2, **dadurch gekennzeichnet, dass** das Schleifen der Trägerwelle (10) eine Bearbeitung der Nockensetzstellen (13) und eine Endbearbeitung von auf der Trägerwelle (10) ausgebildeten Lagerstellen (15) umfasst, die zwischen den oder benachbart zu den Nockensetzstellen (13) ausgebildet sind.

4. Verfahren nach einem der Ansprüche 1 bis 3, **dadurch gekennzeichnet, dass** das einsatzfertige Schleifen der Trägerwelle (10) und insbesondere der Endkomponente (11) auf einer Schleifanlage ausgeführt wird und dass wenigstens das Einbringen des Oberflächenprofils (14) und das Setzen des Nockenelementes (12) auf einer Nockensetzanlage ausgeführt wird.

5. Verfahren nach Anspruch 4, **dadurch gekennzeichnet, dass** für das Einbringen des Oberflächenprofils (14) und für das Setzen des Nockenelementes (12) auf einer Nockensetzanlage die Endkomponente (11) in der Nockensetzanlage eingespannt wird und dass die Trägerwelle (10) auf einer der Endkomponente (11) gegenüberliegenden Seite mit einer Gegenspitze (16) eingespannt wird.

6. Verfahren nach Anspruch 5, **dadurch gekennzeichnet, dass** die Nockenelemente (12) für das Bereitstellen und das Setzen auf die mit dem Oberflächenprofil (14) versehenen Nockensetzstellen (13) über die Gegenspitze (16) geführt werden, sodass die Gegenspitze (16) während des Fügeverfahrens aller Nockenelemente (12) in Anordnung an der Trägerwelle (10) verbleibt.

7. Verfahren nach einem der vorgenannten Ansprüche, **dadurch gekennzeichnet, dass** zum Bereitstellen der Nockenelemente (12) mit einsatzfertigen Eigenschaften die Nockenelemente (12) vor dem Setzen auf die Trägerwelle (10) auf Endmaß geschliffen und/oder oberflächenendbearbeitet werden und insbesondere eine rotatorische Ausrichtung aufweisen, die der späteren Ausrichtung auf der Trägerwelle (10) entspricht.

8. Verfahren nach einem der vorgenannten Ansprüche, **dadurch gekennzeichnet, dass** zum Bereitstellen der Nockenelemente (12) mit einsatzfertigen Eigenschaften die Nockenelemente (12) vor dem Setzen auf die Trägerwelle (10) beschichtet werden.

9. Verfahren nach einem der vorgenannten Ansprüche, **dadurch gekennzeichnet, dass** die Nockenelemente (12) Bohrungen mit einem Durchmesser aufweisen, der geringfügig größer ist als der Durchmesser der Nockensetzstellen (13), erzeugt durch das einsatzfertige Schleifen.

## Claims

1. Method for producing a ready-for-use camshaft (1) for controlling valves of an internal combustion engine, having a carrier shaft (10) on which an end component (11), for example a drive wheel, a phase adjuster or a part of a phase adjuster, is arranged, and having multiple cam elements (12) which are attached in a positionally fixed manner to the carrier shaft (10), wherein the method comprises at least the following steps:
a) providing the carrier shaft (10) and the end component (11),
b) joining the end component (11) to the carrier shaft (10),
c) grinding at least the carrier shaft (10) to form cam seats (13) so as to establish readiness for use and machining of the end component (11) so as to establish readiness for use,
d) introducing a surface profile (14) into a first cam seat (13),
e) providing a cam element (12) with ready-for-use characteristics,
f) seating the cam element (12) on the cam seat (13) provided with the surface profile (14), and
g) repeating steps d) to f) with a frequency corresponding to a required number of cam elements (12).

2. Method according to Claim 1, **characterized in that** the machining of the end component (11) so as to establish readiness for use encompasses grinding machining.

3. Method according to Claim 1 or 2, **characterized in that** the grinding of the carrier shaft (10) encompasses machining of the cam seats (13) and finish machining of bearing points (15) which are formed on the carrier shaft (10) and which are formed between or adjacent to the cam seats (13).

4. Method according to one of Claims 1 to 3, **characterized in that** the grinding of the carrier shaft (10), and in particular of the end component (11), so as to establish readiness for use is performed on a grinding installation, and **in that** at least the introduction of the surface profile (14) and the seating of the cam element (12) are performed on a cam seating installation.

5. Method according to Claim 4, **characterized in that**, for the introduction of the surface profile (14) and for the seating of the cam element (12) on a cam seating installation, the end component (11) is clamped in the cam seating installation, and **in that** the carrier shaft (10) is clamped, on a side situated opposite the end component (11), by way of a tailstock (16).

6. Method according to Claim 5, **characterized in that** the cam elements (12), for the provision and for the seating on the cam seats (13) provided with the surface profile (14), are guided over the tailstock (16) such that the tailstock (16) remains arranged on the carrier shaft (10) during the joining process for all of the cam elements (12).

7. Method according to one of the preceding claims, **characterized in that**, for the provision of the cam elements (12) with ready-for-use characteristics, the cam elements (12), before being seated on the carrier shaft (10), are ground to their final dimensions and/or subjected to surface finish machining and in particular comprise a rotational orientation which corresponds to the later orientation on the carrier shaft (10).

8. Method according to one of the preceding claims, **characterized in that**, for the provision of the cam elements (12) with ready-for-use characteristics, the cam elements (12) are coated before being seated on the carrier shaft (10).

9. Method according to one of the preceding claims, **characterized in that** the cam elements (12) comprise bores with a diameter slightly larger than the diameter of the cam seats (13) generated by way of the grinding for establishing readiness for use.

## Revendications

1. Procédé de fabrication d'un arbre à cames (1) prêt à l'emploi pour commander des soupapes d'un moteur à combustion interne, comprenant un arbre de support (10) sur lequel est disposé un composant terminal (11), par exemple une roue d'entraînement, un déphaseur ou une partie d'un déphaseur, et plusieurs éléments de cames (12) qui sont montés de manière fixée en position sur l'arbre de support (10), le procédé présentant au moins les étapes suivantes :
a) fourniture de l'arbre de support (10) et du composant terminal (11),
b) assemblage du composant terminal (11) sur l'arbre de support (10),
c) meulage de finition d'au moins l'arbre de support (10) pour créer des emplacements de cames (13) et usinage de finition du composant terminal (11),
d) introduction d'un profil de surface (14) dans un premier emplacement de came (13),
e) fourniture d'un élément de came (12) avec des propriétés prêtes à l'emploi,
f) positionnement de l'élément de came (12) sur l'emplacement de came (13) pourvu du profil de surface (14) et
g) répétition des étapes d) à f) avec une fréquence correspondant à un nombre exigé d'éléments de cames (12).

2. Procédé selon la revendication 1, **caractérisé en ce que** l'usinage de finition du composant terminal (11) comprend un usinage par meulage.

3. Procédé selon la revendication 1 ou 2, **caractérisé en ce que** le meulage de l'arbre de support (10) comprend un usinage des emplacements de cames (13) et un usinage de finition de points d'appui (15) réalisés sur l'arbre de support (10), lesquels sont réalisés entre les emplacements de cames (13) ou à côté de ceux-ci.

4. Procédé selon l'une quelconque des revendications 1 à 3, **caractérisé en ce que** le meulage de finition de l'arbre de support (10) et notamment du composant terminal (11) est réalisé sur une installation de meulage et **en ce qu'**au moins l'introduction du profil de surface (14) et le positionnement de l'élément de came (12) sont réalisés sur une installation de positionnement de came.

5. Procédé selon la revendication 4, **caractérisé en ce que** pour l'introduction du profil de surface (14) et pour le positionnement de l'élément de came (12) sur une installation de positionnement de came, le composant terminal (11) est serré dans l'installation de positionnement de came et **en ce que** l'arbre de support (10) est serré sur un côté opposé au composant terminal (11) avec une contre-pointe (16).

6. Procédé selon la revendication 5, **caractérisé en ce que** les éléments de cames (12) devant être fournis et positionnés sur les emplacements de cames (13) pourvus du profil de surface (14) sont guidés sur la contre-pointe (16) de telle sorte que la contre-pointe (16), pendant le procédé d'assemblage de tous les éléments de cames (12), reste agencée sur l'arbre de support (10).

7. Procédé selon l'une quelconque des revendications précédentes, **caractérisé en ce que** pour fournir les éléments de cames (12) avec des propriétés prêtes à l'emploi, les éléments de cames (12), avant le positionnement sur l'arbre de support (10), sont meulés à leur dimension finale et/ou sont soumis à un usinage de surface final et présentent notamment une orientation en rotation qui correspond à l'orientation ultérieure sur l'arbre de support (10).

8. Procédé selon l'une quelconque des revendications précédentes, **caractérisé en ce que** pour fournir les éléments de cames (12) avec des propriétés prêtes à l'emploi, les éléments de cames (12) sont revêtus avant le positionnement sur l'arbre de support (10).

9. Procédé selon l'une quelconque des revendications précédentes, **caractérisé en ce que** les éléments de cames (12) présentent des alésages ayant un diamètre qui est légèrement supérieur au diamètre des emplacements de cames (13), produit par le meulage de finition.
